# EUROPEAN PATENT SPECIFICATION

(11) **EP 4 073 401 B1**
(45) Date of publication and mention of the grant of the patent: **15.01.2025**
(21) Application number: 20825276.7
(22) Date of filing: 10.12.2020
(51) Int. Cl.: F16H 59/02, F16H 61/24, F16H 59/08, B60K 20/06

(54) **A CONTROL INTERFACE SYSTEM FOR CONTROLLING A VEHICLE THROUGH AN ELECTRONIC CONTROL UNIT, AND THE VEHICLE COMPRISING SAID SYSTEM**
STEUERSCHNITTSTELLENSYSTEM ZUM STEUERN EINES FAHRZEUGS ÜBER EINE ELEKTRONISCHE STEUEREINHEIT, WOBEI DAS FAHRZEUG DIESES SYSTEM UMFASST
SYSTÈME D'INTERFACE DE COMMANDE POUR COMMANDER UN VÉHICULE PAR L'INTERMÉDIAIRE D'UNE UNITÉ DE COMMANDE ÉLECTRONIQUE ET VÉHICULE COMPRENANT LEDIT SYSTÈME

(30) Priority: 11.12.2019 NL 2024430
(43) Date of publication of application: 19.10.2022
(73) Proprietor: DAF Trucks N.V., 5643 TW Eindhoven (NL)
(72) Inventor: UYTTENDAELE, Alex James, 5643 TW Eindhoven (NL); SEREN PALOMAR, Manuel, 5643 TW Eindhoven (NL)
(74) Representative: V.O.
(86) International application number: PCT/NL2020/050769
(87) International publication number: WO 2021/118348

(56) References cited:
- EP-A1- 3 453 925
- WO-A1-2006/083221
- SE-C2- 530 989
- US-A1- 2007 261 509
- US-A1- 2018 259 063
- US-A1- 2018 274 665
- US-A1- 2018 320 780

## Description

The invention relates a vehicle and a control interface system for controlling said vehicle.

Developing a driver's environment in a vehicle involves endeavoring to render all controls as readily accessible to the driver as possible. The more the driver can concentrate on the road, the safer the performance of the vehicle will be. A natural step is therefore to try to provide vehicle control switches and functions at or near the steering wheel.

One of the controls which the driver frequently uses is the gear lever. A gear lever for a (semi-automatic) gearbox is known from SE462246. The lever can be moved in the longitudinal direction of the vehicle for setting various functional positions. The positions are usually for manual gear selection (M), automatic driving mode (A) with gear selection (D), neutral (N) and reverse (R). In positions M and A the lever can be moved perpendicular to the longitudinal direction of the vehicle in order to change gear. The lever is conventionally situated beside the driver's seat, on top of the engine tunnel. This means that the driver has to take a hand off the steering wheel when operating the gear lever, which may be disadvantageous with regard to driver safety. US2007261509A1 discloses an actuating device that includes an actuating element with at least three switching positions, the actuating element can be deflected, starting from an intermediate switching position, into at least one other switching position that is located farther away from the basic position.

Autonomous driving has meanwhile evolved to include many functionalities, such as automatic parking or take over of control by an external interface, e.g. in docketing operations. This requires the automatic switching of gear modes between forward (D), neutral (N) and reverse (R). As such there exists a need for need for allowing a gear mode to be selected in such a manner that a manual selection of a gear mode does not interfere with an automated driving operation.

Accordingly, it is an object of the present invention to overcome some of the above indicated disadvantages of the prior art, or at least provide an alternative thereto.

To this end according to a first aspect of the invention there is provided a control interface system for controlling a vehicle through an electronic control unit, the system comprising a first steering column lever comprising a gear mode scroll wheel for controlling a gear box of the vehicle to switch between a plurality of gear modes comprising a forward drive gear mode, for a forward driving of the vehicle, a neutral gear mode, wherein a transmission between engine and wheels is prevented, and a reverse gear mode, for a reversed driving of the vehicle. The gear mode scroll wheel is arranged for rotating from a single spring-back position thereof in a first scrolling direction for changing from either the neutral gear mode into the forward drive gear mode, and the reverse gear mode into the forward drive gear mode, such as via the neutral gear mode; and a second scrolling direction, opposite the first scrolling direction for changing from either the neutral gear mode into the reverse gear mode, and the forward drive gear mode into the reverse gear mode, such as via the neutral gear mode. The single spring-back position is the only rest position of the gear mode scroll wheel, so that the gear box can be controlled to switch between said plurality of gear modes with the single spring-back position as a starting position for rotating the gear mode scroll wheel. The gear mode scroll wheel is arranged on a user facing face of the first steering column lever. As such the present control interface system having the scroll wheel as defined previously allows state-less control that does not correspond to a specific controlled state i.e. gear mode of the gear box. Thus, while the gear box can be controlled to any gear mode, the spring back rest position of the scroll wheel does not reflect the mode. This has a benefit that an alternative control can take over the gear box, such as automated maneuvering or external control. A benefit with respect to an electronic by-pass of a selected gear mode will also prevent the driver from mistaking the gear mode as indicated by an assumed position of the lever or an element thereof.

Accordingly, further to the first aspect of the invention the first steering column lever comprises a drive mode switch for switching a gear box of the vehicle between a manual control for enabling manual drive mode switching, and at least one automatic control for automatic drive mode switching. Further to the above the drive mode switch may be a spring return push button arranged for being pushed from a single spring-back position thereof, into a pushed position for switching between the manual control and the at least one automatic control. The single spring-back position of the switch is the only rest position of the switch, so that the gear box can be controlled to switch between the manual control and the at least one automatic control with the single spring-back position of the switch as a starting position for pushing the switch. A benefit is that this allows the gear box to return to manual control by means of scrolling the gear mode scroll wheel as the drive mode switch is not rested in a prescribed position that dictates the manner of control, such as in an autonomous driving operation This prevents that a given drive mode selection is maintained in a condition that is not desired, e.g. if an automated driving process takes over control from a driver, which increases driver safety.

Optionally, also further to the first aspect of the invention, the first steering column lever may comprise a joint for, in use, articulating with a steering column of the vehicle such that the first lever is pivotable, from a spring-back position in a first plane, in a first direction out of said first plane, such as towards a user, for switching up a gear. Additionally, the first lever may be pivotable in a second direction opposite the first direction out of the first plane, such as away from a user, for switching down a gear. This also allows the possibility of the lever being moved between said number of position in the first plane to switch between further vehicle functionalities. Further to the above option the joint may additionally be arranged such that the first lever is also pivotable in the first plane between the at least one engine brake engaging position and an engine brake disengaging position. The initial resting position of the first lever in the first plane is either one of the at least one engine brake engaging position and an engine brake disengaging position. Optionally, the switching of gears by means of the first column lever will return the vehicle to manual control. The gear mode scroll wheel is arranged on a user facing face of the first steering column lever, according to the present invention.

This allows an intuitive control to the driver, wherein the scroll direction is perpendicular to the first plane.

In accordance with any embodiment according to the first aspect of the invention the gear mode scroll wheel may be arranged to resist scrolling by a user with either one of a first haptic force level, and a second haptic force level different from the first level. The first haptic force is applied for changing from either the neutral gear mode into the forward drive gear mode, and changing from either the neutral gear mode into the reverse gear mode. The second haptic force is applied for changing from the reverse gear mode into the forward drive gear mode via the neutral gear mode, when the user scrolls past the neutral gear mode, and changing from the forward drive gear mode into the reverse gear mode via the neutral gear mode, when the user scrolls past the neutral gear mode. This allows a user to sense via tactile response in what gear mode the vehicle will end up after switching.

Herewith is thus provided an easy and safe operation of the gearbox and retarder, or engine brake using a single control device, whereas the device is prepared for future automated driving functionalities by means of non-fixed control device selection positions. By means of non-fixed control device selection positions it is avoided that a gear selection (e.g. drive, reverse) remains active while parking brake is activated.

For ease of control it is possible to select from 'drive' to 'reverse' and vice versa by a single rotational movement of the rotary selector. To avoid misinterpretation this so-called shifting up and shifting down in two positions is distinguishable by means of different haptic force levels. In particular, the scroll wheel is arranged to shift up to two positions in each direction, distinguishable by means of different haptic force levels.

According to a second embodiment according to the first aspect of the invention the system may also comprise, or alternatively comprise, a second steering column lever comprising a rain sensor scroll wheel and a windscreen wiper scroll wheel. The rain sensor scroll wheel and wiper scroll wheel are spaced from each other along a same axis of rotation and on a same face of the second lever. The rain sensor scroll wheel is arranged for changing a rain sensor sensitivity of the vehicle for sensing rain between at least a first level of sensitivity and a second level of sensitivity greater than the first level of sensitivity. The windscreen wiper scroll wheel is arranged for controlling windscreen wipers of the vehicle to switch between a plurality of wiping modes comprising an off mode wherein the windscreen wipers of the vehicle are inactive, at least one manual mode wherein the windscreen wipers move at a predetermined wiping frequency, and an automatic mode wherein the movement and frequency of movement of the windscreen wipers is based on the sensing of rain by the rain sensor. The windscreen wiper mode scroll wheel is arranged for rotating from a single spring-back position thereof in a first scrolling direction for changing from either the at least one manual mode into the automatic mode, and the off mode into the automatic mode, such as via the manual mode, and a second scrolling direction for changing from either the at least one manual mode into the off mode, and the automatic mode into the off mode, such as via the at least one manual mode. The single spring-back position is the only rest position of the windscreen wiper scroll wheel, so that the windscreen wipers can be controlled to switch between said plurality of windscreen wiping modes with the single spring-back position of the windscreen wiper scroll wheel as a starting position for rotating the windscreen wiper scroll wheel.

Thus an easy and safe operation of the horn, headlamps, direction indicators, and windscreen wiper functions by using a single control device, is provided whereas the device allows automated functionalities by means of non-fixed control device selection positions. By means of the non-fixed control device selection positions it is avoided that for example the windscreen wipers or main beam headlamps will immediately be activated once the vehicle is started after each (ignition) key cycle. The second embodiment expands on the first embodiment, features of the first and second embodiments are therefor combinable.

Further to the second embodiment the second lever comprises a horn switch for activating the horn of the vehicle, and a washer switch for activating a windshield cleaning spray mechanism of the vehicle. Each of the horn switch and the washer switch is arranged as a spring-back push button, which is moveable between an active and an inactive position and wherein such a push button is biased to return to the inactive position such that the horn and spray mechanism are only active when the respective switch is being pushed. Additionally, the horn switch and the washer switch may be arranged on a distal end face of the second lever and wherein the rain sensor scroll wheel and a windscreen wiper mode scroll wheel are arranged on a user facing face of the second lever. This allows for an increased ease of control

Additionally, the second steering column lever may comprises a joint for, in use, articulating with a steering column of the vehicle such that the second lever is pivotable around its joint from a spring-back position in a third plane, in a direction out of said third plane, towards the driver to switch the head lights between off, flasher in which the head lights provide a burst of flashes, and main beam in which the headlights are provide continuous light. This also allows for an increased ease of control. In further addition to the above the joint of the second steering column lever is further arranged such that the second steering column lever is pivotable around its joint in the third plane out of its spring-back position, in which a right hand turning signal of the vehicle is off, in an upward direction to a first upper resting position in which the right hand turning signal is on. The second steering column lever is arranged to spring back to its spring-back position from the first upper resting position. The second steering column lever is pivotable in the upward direction to a second upper resting position, beyond the first upper resting position, in which the right hand turning signal is on, and wherein the second steering column lever is arranged for being only manually returned to its spring-back position from the second upper resting position. This allows an additional readily available control, with an ability to sideline spring-back functionalities. Additionally or alternatively the joint of the second steering column lever is arranged such that the second steering column lever is pivotable around its joint in the third plane out of its spring-back position, in which a left hand turning signal of the vehicle is off, in an downward direction to a first lower resting position in which the left hand turning signal is on. The second steering column lever is arranged to spring back to its spring-back position from the first lower resting position. The second steering column lever is pivotable in the downward direction to a second lower resting position, beyond the first lower resting position, in which the left hand turning signal is on. The second steering column lever is arranged for being only manually returned to its spring-back position from the second lower resting position. This also allows an additional readily available control, with an ability to sideline spring-back functionalities.

According to a second aspect of the invention there is provided a vehicle comprising an electronic control unit, and a system according to any embodiment of the first aspect of the invention for controlling the vehicle through the electronic control unit. The electronic control unit being a known electronic control unit.

Further advantageous aspects of the invention will become clear from the appended description and in reference to the accompanying drawings, in which:
Figure 1 shows a schematic overview of a vehicle comprising a control interface system according to the invention;
Figure 2 shows a spatial view of the first lever of the system with a DN.R scroll wheel explained;
Figure 3 shows a schematic view of the system perpendicular to the steering wheel column of the vehicle;
Figure 4 shows a schematic view of the system from the driver's point of view;
Figure 5 shows another schematic view of the system perpendicular to the steering wheel column of the vehicle;
Figure 6 shows another schematic view of the system from the driver's point of view;
Figures 7A-7C each show the cross sectional view A-A of the first lever according to Figure 2, in different scrolling angles;
Figure 8 shows a spatial view of the second lever of the system;
Figure 9 shows a schematic view of the system perpendicular to the steering wheel column of the vehicle, showing both the first and the second lever;
Figure 10 shows a schematic view of the system from the driver's point of view, showing both the first and the second lever;

### Detailed description

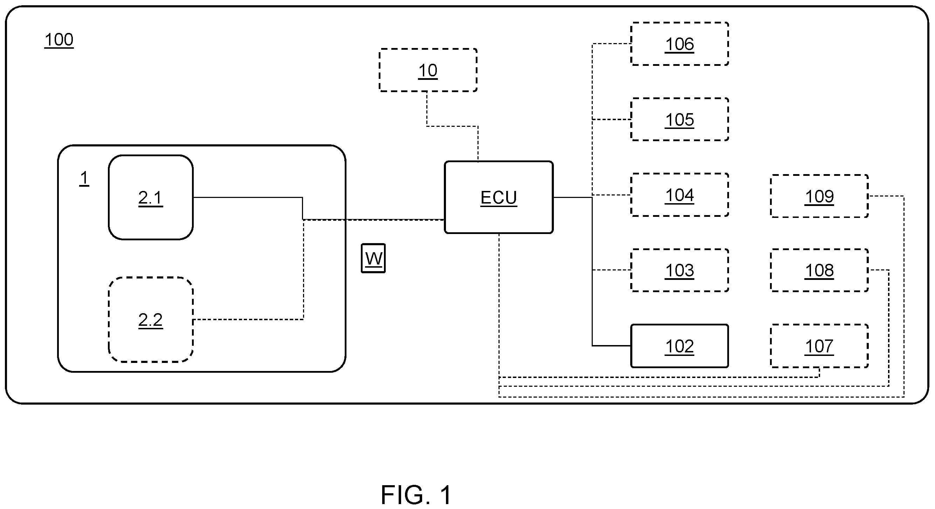

Figure 1 shows a schematic overview of a vehicle 100 in which a control interface system 1, representing also a first control interface system, is provided for controlling the vehicle 100 through an electronic control unit (ECU). Optionally, the vehicle 100, in particular, gear box 102 can be controlled by a second control interface system 10, that may be external to the vehicle, e.g. via a wireless interface. The second control interface system 10 can for instance take over driving of the vehicle 100 from the driver, e.g. in park, docketing or platooning conditions. The control interface system is communicatively connected, e.g. via a wired connection (W), to the control unit. The system can be seen to at least have a first steering column lever 2.1, also denoted as first lever and known as the first handle, and optionally a second steering column lever 2.2, also denoted as second lever and known as the second handle, as indicated by the interrupted lines --- in Figure 1. This first lever 2.1, much like the second lever 2.2, is used as an interface to communicate the intentions of a user, in this example the driver, of the vehicle to the electronic control unit, further herein shortened to ECU, of the vehicle for further execution. The ECU is herein arranged to translate user interactions with the system into actions performed by the vehicle. In this example the vehicle 100 is a truck.

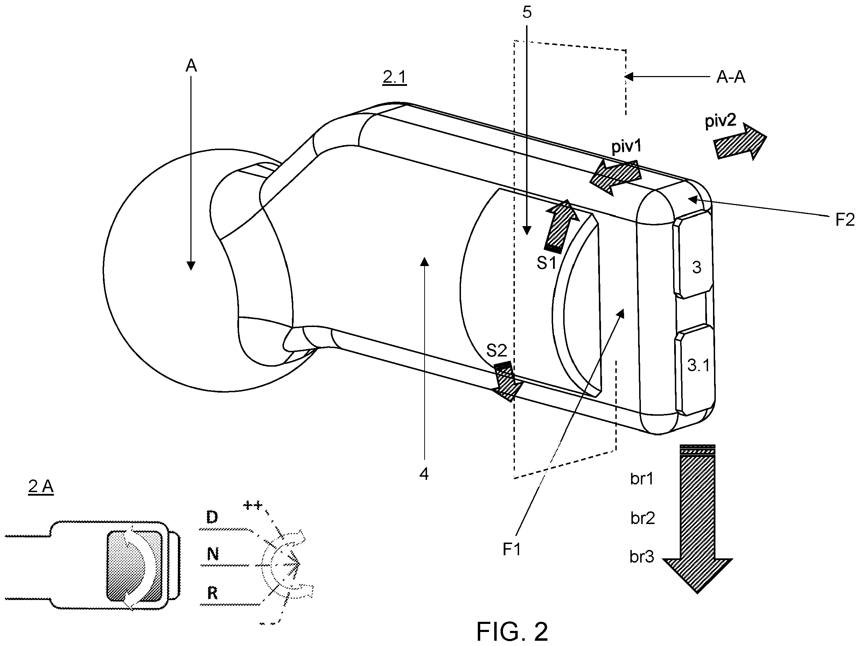

The first lever 2.1 can also be seen in Figure 2 and will be discussed in more detail. The first lever has a gear mode scroll wheel 5 for controlling a gear box 102 of the vehicle, via the ECU, to switch between a plurality of gear modes. These gear modes are a forward drive gear mode, for a forward driving of the vehicle, a neutral gear mode, wherein a transmission between engine and wheels is prevented, and a reverse gear mode, for a reversed driving of the vehicle. The gear mode scroll wheel is rotatable from a single spring-back position thereof in a first scrolling direction S1, which is upward, for changing from either the neutral gear mode into the forward drive gear mode, and the reverse gear mode into the forward drive gear mode, such as via the neutral gear mode. Thus the gear mode can be shifted up from reverse or neutral into forward drive by an upward scrolling movement of the gear mode scroll wheel. The gear mode scroll wheel is also rotatable from its single spring-back position into a second scrolling direction S2, opposite the first scrolling direction which is downward in this example, for changing from either the neutral gear mode (N) into the reverse gear mode (R), and the forward drive gear mode (D) into the reverse gear mode (R), such as via the neutral gear mode (N). In other words the gear mode can be shifted down from forward drive or neutral to reverse by a downward scrolling movement of the gear mode scroll wheel as is also illustrated in the schematic insert 2A: In an example, to shift from 'drive' to 'neutral' and vice versa, or from 'reverse' to 'neutral' and vice versa, the rotary selector is rotated about 10° which is noticeable by a haptic force feedback, e.g. a click. For shifting in two positions (e.g. from 'drive' to 'reverse' and vice versa) the rotary selector is turned more than 10° for a second click. By this a misinterpretation is avoided which drive selection is activated.

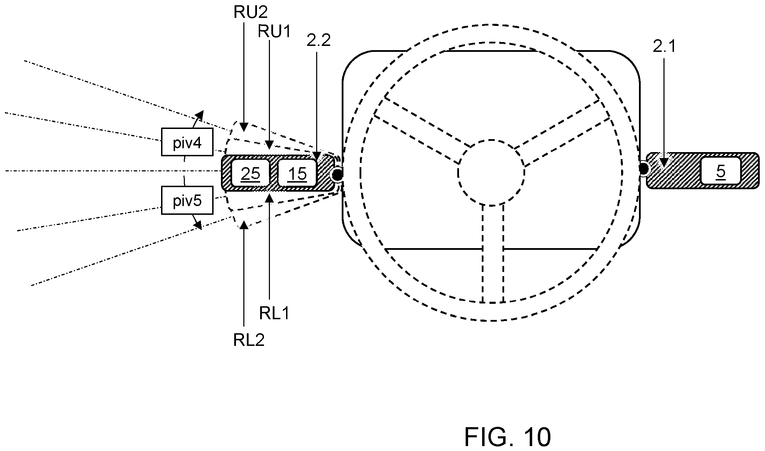

In this example the first steering column lever is provided at the right hand side of the steering wheel column, with respect to a driver of the vehicle. The mentioned upward and downward scrolling directions S1 and S2 respectively can be seen as directions with respect to the vehicle. The single spring-back position is the only rest position of the gear mode scroll wheel 5. This means that the gear mode scroll wheel 5 is biased to always return to the spring-back position and cannot be rested in any other position outside of the spring-back position without a user having to resist a spring-back force exerted by the control wheel. The gear mode scroll wheel being designed in this manner allows the gear box to be controlled to switch between the plurality of gear modes with the single spring-back position as a starting position for rotating the gear mode scroll wheel. By allowing the gear mode scroll wheel to scroll back to the spring back position, instead of allowing it to be rested in a position that locks the gear mode in a particular mode the system allows for non-manual, such as automatic switching, of gear modes, in particular, via interface 10 depicted in Figure 10. The first steering column lever 2.1 has a drive mode switch 3 for switching a gear box 102 of the vehicle between a manual control for enabling manual drive mode switching, and an automatic control for automatic drive mode switching. Automatic control in this example also includes automatic gear switching and can be an ECU programmed manner of control of the gearbox as known. In use, the switching of gear modes via the control wheel returns the gear box to the manual control when the gear box is in the automatic drive mode. One example of an automatic control mode that requires gear mode switching is an automatic parking assist, wherein the ECU controls the gearbox to switch between gear modes for forward and reverse driving. The person may interrupt any automatic process such as the automatic parking assist, and return the vehicle to manual control.

The drive mode switch 3 is in this example a spring return push button arranged for being pushed from a single spring-back position thereof, into a pushed position for switching between the manual gear selection control and the at least one automatic driving mode control. In Figure 2 the drive mode switch 3 is shown. The single spring-back position of the switch is the only rest position of the switch 3, so that the gear box can be controlled to switch between the manual drive mode and the at least one automatic drive mode with the single spring-back position of the switch as a starting position for pushing the switch, with a state-less configuration of the switch. The drive mode switch 3 is in this example provided on a distal end face F2 of the first lever 2.1. An eco-mode button 3.1 is also provided to the first lever 2.1 on the same face F2 as the drive mode switch 3 and can be used switch to and from an economic driving mode in which the performance of the engine is inhibited by reducing for example the throttle response in favor of fuel economy.

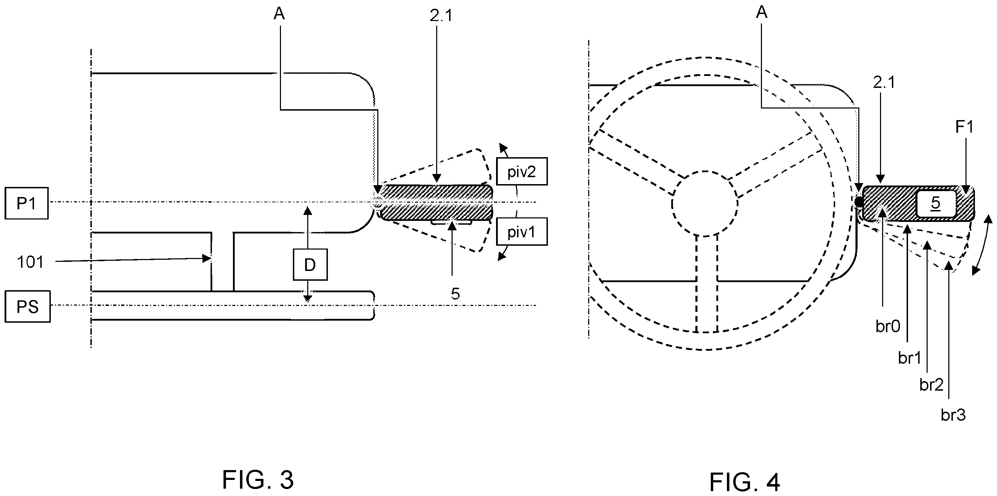

The first steering column lever 2.1 can in Figure 2 also be seen to have a joint A for, in use, articulating with a steering column 101 of the vehicle 100. One manner in which the first steering column lever 2.1 articulates with respect to the steering column 101 is shown in Figure 3 such that the first lever 2.1 is pivotable, from a spring-back position in a first plane P1, in a first direction piv1 out of said first plane P1 towards the driver, or in other terms towards the upstanding part of the driver seat (not shown, but customary), of the vehicle 100. Pivoting the first lever 2.1 in the first direction piv1 controls the gearbox 102 via the ECU to switch up a gear. The first lever 2.1 is also pivotable in a second direction piv2 opposite the first direction also out of the first plane, away from the driver, for controlling the gearbox via the ECU to switch down a gear. In this example the first plane P1 can be seen to extend parallel to a plane of the steering wheel PS of the vehicle. The spring-back position is defined by the first lever 2.1 resting in the first plane P1. The first lever is arranged to only rest in the first plane and thus cannot be rested in a position wherein it is pivoted outside of the first plane.

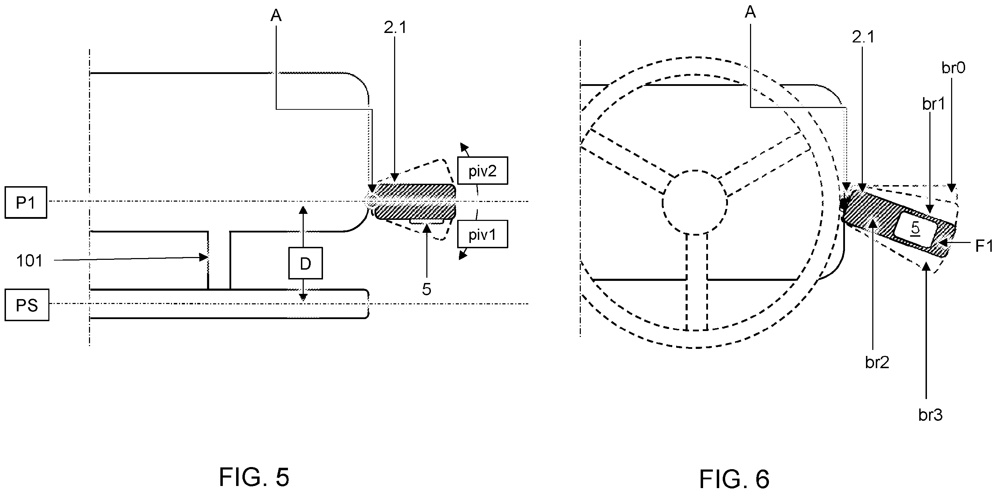

The joint A is further arranged such that the first lever 2.1 is pivotable in the first plane P1 between the at least one engine brake engaging position br1, br2, and br3 and an engine brake disengaging position brU. The initial resting position of the first lever 2.1 in the first plane P1 is either one of the at least one engine brake engaging position and an engine brake disengaging position. In both Figure 3 and Figure 4 the first lever 2.1 can be seen in the engine brake disengaging position br0. In Figure 4 the at least one engine brake engaging position can be seen to comprise a plurality of engine breaking positions, namely br1, br2, and br3 which subsequently increase the recirculation of exhaust gasses and/or back pressure to the engine of the vehicle. Each of these positions br1-br3 may define a resting position of the first lever in the first plane at a different, increasingly larger, angle with respect to the disengaging position br0. This can also be seen in Figures 5 and 6 wherein the first lever has assumed breaking position br2. It can further be seen that when moving between engine brake settings the lever maintains a same distance D with respect to the plane of the steering wheel. It is noted that the first lever in Figures 5 and 6 is at rest in the first plane P1. The driver may find it pleasant to expect the lever 2.1 at a set distance with respect to the steering wheel. It can further be seen from Figures 3 - 6 that the gear mode scroll wheel 5 is arranged on a user facing face F1 of the first lever. The first lever 2.1 may further have a display 4 on the user facing face F1 which indicates whether the engine is currently being braked and what braking level is applied, br1, br2, or br3.

Alternatively, instead of braking levels br0-br4, first lever 2.1 is designed to switch engine braking between on and off, and by movement of the first lever in the first plane, and for spring returning to a single spring-back position in the first plane. This alternative is herein further not discussed or shown.

The gear mode scroll wheel 5 is arranged to resist scrolling by a user with a first haptic force level for changing from either the neutral gear mode into the forward drive gear mode, and changing from either the neutral gear mode into the reverse gear mode. The scroll wheel is arranged to resist scrolling by a user with a second haptic force level for changing from the reverse gear mode into the forward drive gear mode via the neutral gear mode, when the user scrolls past the neutral gear mode, and changing from the forward drive gear mode into the reverse gear mode via the neutral gear mode, when the user scrolls past the neutral gear mode.

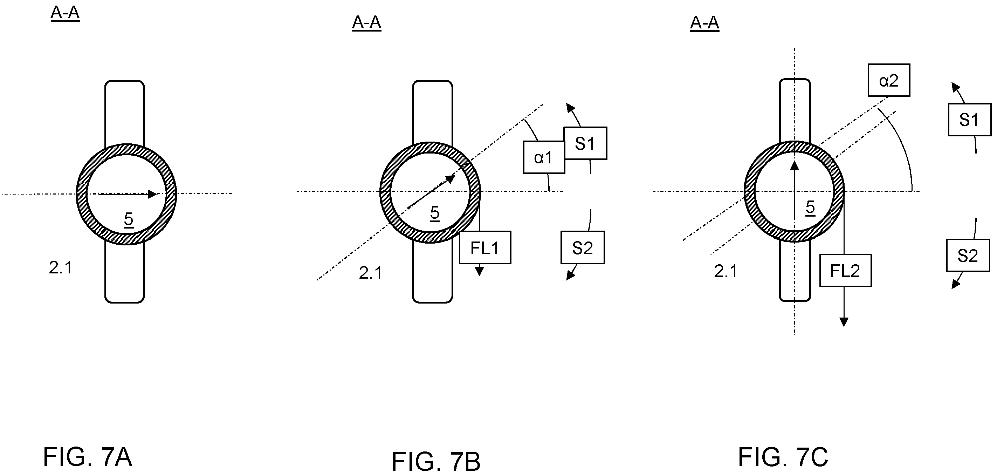

Figures 7A-7C show a cross section A-A of the first lever as shown in Figure 2. In Figure 7A-7C an example is given wherein the scroll wheel is scrolled from its spring-back position as shown in Figure 7A in the upward direction S1 to switch from a reverse gear mode to a forward drive gear mode via the neutral gear mode. In Figure 7B the scroll wheel assumes a first angle α1, scrolling from the spring-back position to the first angle α1 the scroll wheel provides a first haptic force level FL1 against scrolling. In this example α1 is 45 degrees, but this is merely for showcasing the working of the gear mode scroll wheel, and α1 may instead be another value. When the user scrolls the gear mode scroll wheel 5 between an angle 0 and α1 with respect to the spring-back position the gear box is shifted, via the ECU, from the reverse gear mode to the neutral gear mode. When the user scrolls past α1 such as up to a2, which is greater than α1, and in this example about 60 degrees, the scroll wheel will provide a second haptic force level FL2 against scrolling greater than the first level FL1. This example is shown in Figure 7C. Alternatively, when the user scrolls past α2, the haptic force level may return to the first force level FL1 or another force level to mimic a prescribed force curve.

The scroll wheel behaves the same way when the user moves the scroll wheel 5 from the forward drive gear mode into the reverse gear mode via the neutral gear mode, wherein the only difference is that the scrolling direction the second scrolling direction S2, opposite the first scrolling direction S1. The haptic force levels FL1, FL2 are chosen such as to not strain the users while scrolling, but merely such that a difference can be felt in force levels when transitioning beyond a mode, in this example beyond the neutral gear mode from either the forward drive gear mode into the reverse gear mode, or from the reverse gear mode into the forward drive gear mode.

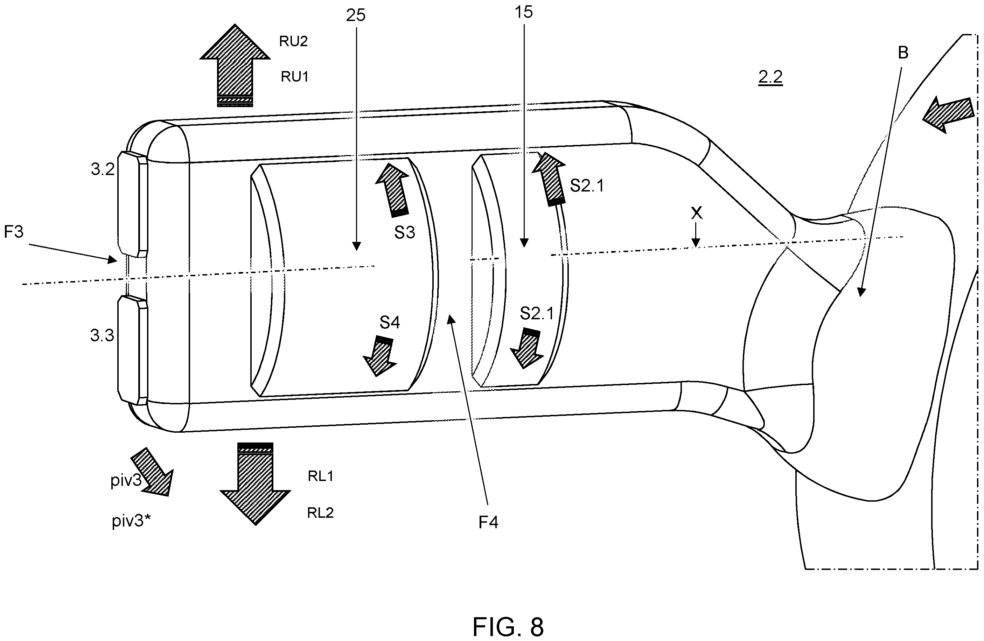

The system may also have a second steering column lever 2.2 comprising a rain sensor scroll wheel 15 and a windscreen wiper scroll wheel 25. In Figure 8 it can be seen that the rain sensor scroll wheel and wiper scroll wheel are spaced from each other along a same axis X of rotation and on a same face of the second lever 2.2. The rain sensor scroll wheel 15 is arranged for changing a sensitivity of a rain sensor 103 of the vehicle 100 (Fig 1) for sensing rain between at least a first level of sensitivity and a second level of sensitivity greater than the first level of sensitivity. In this example there are five different levels of sensitivity which can be selected by scrolling the rain sensor scroll wheel up S1.1 towards the most sensitive level, and down towards S2.1 the least sensitive level of the five levels. Of course, this may also be the other way around. The windscreen wiper scroll wheel 25 is arranged for controlling windscreen wipers 104 (Fig 1) of the vehicle, such as via the ECU or directly to the wipers, to switch between a plurality of wiping modes. The modes here consist of an off mode wherein the windscreen wipers of the vehicle are inactive, at least one manual mode wherein the windscreen wipers move at a predetermined wiping frequency, and an automatic mode wherein the movement and frequency of movement of the windscreen wipers is based on the sensing of rain by the rain sensor. The windscreen wiper mode scroll wheel 25 is arranged for rotating from a single spring-back position thereof in a first scrolling direction S3 for changing from either the at least one manual mode into the automatic mode, and the off mode into the automatic mode, such as via the manual mode. The windscreen wiper mode scroll wheel 25 is further also arranged for rotating from a single spring-back position thereof in a second scrolling direction S4 for changing from either the at least one manual mode into the off mode, and the automatic mode into the off mode, such as via the at least one manual mode. The single spring-back position of the windscreen wiper scroll wheel is the only rest position thereof, so that the windscreen wipers can be controlled to switch between the plurality of windscreen wiping modes with the single spring-back position of the windscreen wiper scroll wheel 25 as a starting position for rotating the windscreen wiper scroll wheel 25.

In Figure 8 the second lever 2.2 can further be seen to have a horn switch 3.2 for activating the horn 105 of the vehicle 100 either directly or via the ECU. The second lever 2.2 also has a washer switch 3.3 for activating a windshield cleaning spray mechanism 106 of the vehicle 100 (Fig 1).

The horn switch 3.2 is arranged as a spring-back push button which can be pushed to sound the horn 105 (Fig 1), and which returns promptly to its spring-back position after the pushing of the horn switch has ended so as to stop sounding the horn. In this example the horn switch can not be parked in any position outside of its spring-back position to prevent the sounding of the horn without continued action of the driver. The washer switch 3.3 is also arranged as a spring-back push button which can be pushed to activate the windshield cleaning spray mechanism as mentioned, and which returns promptly to its spring-back position after the pushing thereof by a user has ended so as to stop the windshield cleaning spray mechanism from spraying the windshield In this example the washer switch can not be parked in any position outside of its spring-back position to prevent the spraying of the windshield without the continued pushing of the washer switch by the driver. The horn switch 3.2 and the washer switch 3.3 are both arranged on a distal end face F3 of the second lever 2.2. The rain sensor scroll wheel 15 and a windscreen wiper mode scroll wheel 25 are arranged on a user facing face F4 of the second lever 2.2.

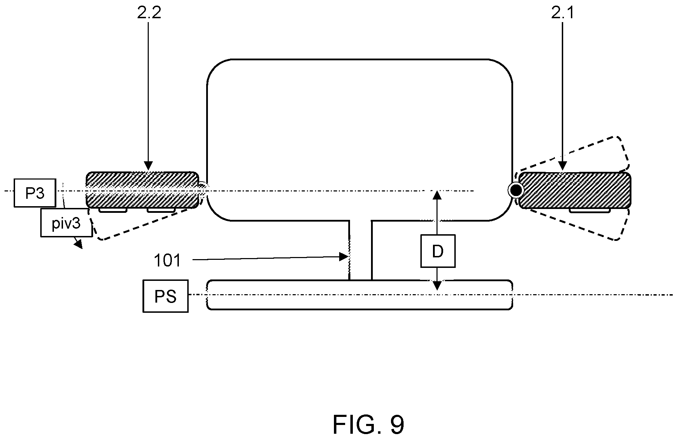

The second steering column lever 2.2 has a joint B for, in use, articulating with a steering column 101 of the vehicle 100 such that the second lever 2.2 is pivotable around its joint B from a spring-back position thereof in a third plane P3 in a direction piv3 out of said third plane P3 towards the driver. This is to switch head lights 107 of the vehicle 100 between off, flasher in which the head lights provide a burst of flashes, and main beam in which the headlights are provide continuous light. In particular off, flasher and main beam are sequential settings wherefrom a user can switch to the next setting in the sequence by the act of pivoting the second lever in direction piv3. The movement can be repeated piv3* in quick succession after the second lever returns to its spring-back position. Figure 9 shows the system in which the second lever 2.2 is on the opposite side of the steering wheel column, with respect to the first lever 2.1 accessible to the user. In the example of Figure 9, wherein there are two levers 2.1, 2.2, the third plane P3 (Fig 9) and the first plane P1 (Fig 5) may be the same plane so that both of the levers 2.1 and 2.2 line up at a same distance from the steering wheel plane PS (Fig 9). Having both levers, at the same distance from the steering wheel plane may increase the ease of use as it allows the driver to rely on a same expected distance to the levers at any time.

The joint B of the second steering column lever 2.2 is further arranged such that the second steering column lever 2.2 is pivotable around its joint B in the third plane P3 out of its spring-back position. This can be seen in Figure 10. In the spring-back position of the second lever 2.2 a right hand turning signal 108 of the vehicle is off. The second lever 2.2 can be pivoted upwards piv4 from its spring-back position to a first upper resting position RU1 in which the right hand turning signal is on. The second steering column lever 2.2 is arranged to spring back to its spring-back position from the first upper resting position RU1, such as when the vehicle has completed a turn, or when the steering wheel is turned in a direction opposite the indicated turn that is being signaled. The second steering column lever 2.2 is further pivotable in the upward direction to a second upper resting position RU2, beyond the first upper resting position RU1, in which the right hand turning signal is also on, and wherein the second steering column lever 2.2 is arranged for being only manually returned to its spring-back position from the second upper resting position. More precisely, in the second upper resting position the right hand turning signal 108 remains on until the user returns the lever to its spring-back position. Figure 8 also shows the direction of pivoting of the second lever 2.2 for obtaining the resting positions RU1, RU2, RL1 and RL2.

The joint B of the second steering column lever 2.2 is further also arranged such that the second steering column lever 2.2 is pivotable around its joint B in the third plane P3 out of its spring-back position, in which a left hand turning signal 109 of the vehicle is off, in an downward direction to a first lower resting position RL1 in which the left hand turning signal is on. The second steering column lever 2.2 is arranged to spring back to its spring-back position from the first lower resting position. The second steering column lever 2.2 is pivotable in the downward direction piv5 to a second lower resting position RL2, beyond the first lower resting position, in which the left hand turning signal is on, and wherein the second steering column lever 2.2 is arranged for being only manually returned to its spring-back position from the second lower resting position. More precisely, in the second lower resting position the left hand turning signal 109 remains on until the user returns the lever to its spring-back position.

Accordingly there is described herein a motor vehicle, which is not part of the present invention, comprising a steering column and a control device mounted on the steering column for operating the gear change modes: automatic drive, manual gear selection drive, crawl drive, and eco drive by means of a press button with springback position, and for operating a gearbox, wherein the gear selection switch comprises a rotary element designed and disposed so as to be rotatable in order to engage a gear in the gear modes drive, neutral, and reverse, the rotation being round an axle substantially parallel to the transverse axle of the steering column, characterized in that the rotary element can engage a change in gear mode (drive, neutral, and reverse) in one single operation in any of the other gear modes by rotating the element whereby the rotary element is arranged to the spring-back position.

Optionally, the control device can be pushed away from the driver to shift one gear down whereby the control device is arranged to the springback function.

Optionally, the control device can be pulled towards from the driver to shift one gear up whereby the control device is arranged to the springback function.

Optionally, the control device can be pivoted downwards along an axle substantially parallel to the steering column shaft to engage the engine brake whereby the control device is arranged to the springback function.

Optionally, the control device can be pivoted downwards along an axle substantially parallel to the steering column shaft to engage the retarder, or engine brake whereby the control device is has multiple fixed positions.

Optionally, the rotary selector can shift up to two positions in each direction, distinguishable by means of different haptic force levels. n).

Accordingly there is described herein a control device, which is not part of the present invention, mounted on the steering column for operating the horn and windscreen washer by means of a press button with springback position, and for operating the windscreen wipers, wherein the windscreen wiper selection switch comprises a first rotary element designed and disposed so as to be rotatable in order to engage the rain sensitivity sensor, and a second rotary element designed and disposed so as to be rotatable in order to engage the windscreen wipers in the windscreen wipers mode off, automatic, normal speed and high speed, the rotation being round an axle substantially parallel to the transverse axle of the steering column, characterized in that the rotary element can engage a windscreen wipers mode (off, automatic, normal speed, and high speed) by rotating the element whereby the rotary element is arranged to the springback position.

Optionally, the control device can be pulled towards the driver to engage the headlamp flasher and main beam whereby the control device is arranged to the springback function.

Optionally, the control device can be pivoted upwards along an axle substantially parallel to the steering column shaft to engage the right hand direction indicator.

Optionally, the control device can be pivoted downwards along an axle substantially parallel to the steering column shaft to engage the left hand direction indicator.

## Claims

1. A control interface system (1) for controlling a vehicle (100) through an electronic control unit (ECU), the system comprising a first steering column lever (2.1) comprising:
a gear mode scroll wheel (5) for controlling a gear box (102) of the vehicle to switch between a plurality of gear modes comprising a forward drive gear mode, a neutral gear mode, and a reverse gear mode,
wherein the gear mode scroll wheel (5) is arranged for rotating from a single spring-back position thereof in:
- a first scrolling direction (S1) for changing from either the neutral gear mode into the forward drive gear mode, and the reverse gear mode into the neutral gear mode or forward drive gear mode, such as via the neutral gear mode; and
- a second scrolling direction (S2), opposite the first scrolling direction for changing from either the neutral gear mode into the reverse gear mode, and the forward drive gear mode into the neutral gear mode or reverse gear mode, such as via the neutral gear mode,
wherein the single spring-back position is the only rest position of the gear mode scroll wheel (5), so that the gear box (102) can be controlled to switch between said plurality of gear modes with the single spring-back position as a starting position for rotating the gear mode scroll wheel, **characterized in that** the gear mode scroll wheel (5) is arranged on a user facing face (F1) of the first steering column lever (2.1).

2. The control interface system according to claim 1, wherein the gear mode scroll wheel (5) is arranged to shift up to two positions in each direction, distinguishable by means of different haptic force levels.

3. The control interface system according to any previous claim, wherein the different haptic force levels include either one of a first haptic force level (FL1), and a second haptic force level (FL2) different from the first level, wherein the first haptic force (FL1) is applied for
changing from either the neutral gear mode into the forward drive gear mode, and changing from either the neutral gear mode into the reverse gear mode, and
wherein the second haptic force (FL2) is applied for
changing from the reverse gear mode into the forward drive gear mode via the neutral gear mode, when the user scrolls past the neutral gear mode, and
changing from the forward drive gear mode into the reverse gear mode via the neutral gear mode, when the user scrolls past the neutral gear mode.

4. The control interface system according to any previous claim, wherein the first steering column lever (2.1) comprises a drive mode switch (3) for switching a gear box (102) of the vehicle between a manual control for enabling manual drive mode switching, and at least one automatic control for automatic drive mode switching.

5. The control interface system according to any of the preceding claims, wherein the first steering column lever (2.1) comprises a joint (A) for, in use, articulating with a steering column (101) of the vehicle (100) such that the first steering column lever (2.1) is pivotable, from a second spring-back position in a first plane (P1), in a first direction (piv1) out of said first plane (P1), such as towards a user, for switching up a gear, and pivotable in a second direction (piv2) opposite the first direction out of the first plane (P1), such as away from a user.

6. The control interface system according to claim 5, wherein the joint (A) is further arranged such that the first steering column lever (2.1) is pivotable in the first plane (P1) between the at least one engine brake engaging position (br1, br2, br3) and an engine brake disengaging position (br0), wherein the initial resting position of the first steering column lever (2.1) in the first plane (P1) is either one of the at least one engine brake engaging position (br1, br2, br3) and an engine brake disengaging position (br0).

7. The control interface system according to any previous claim, comprising a second steering column lever (2.2) comprising a rain sensor scroll wheel (15) and a windscreen wiper scroll wheel (25)

8. The control interface system according to at least claim 7.
wherein the second steering column lever (2.2) comprises:
a horn switch (3.2) for activating the horn (105) of the vehicle (100); and
a washer switch (3.3) for activating a windshield cleaning spray mechanism (106) of the vehicle (100),
wherein each of the horn switch (3.2) and the washer switch (3.3) is arranged as a spring-back push button, which is moveable between an active and an inactive position and wherein such a push button is biased to return to the inactive position such that the horn and spray mechanism are only active when the respective switch is being pushed.

9. The control interface system according to at least claim 8,
wherein the horn switch (3.2) and the washer switch (3.3) are arranged on a distal end face (F3) of the second steering column lever (2.2) and wherein the rain sensor scroll wheel (15) and a windscreen wiper mode scroll wheel (25) are arranged on a user facing face (F4) of the second steering column lever (2.2).

10. The control interface system according to at least any previous claim 7-9, wherein the second steering column lever (2.2) comprises a joint (B) for, in use, articulating with a steering column (101) of the vehicle (100) such that the second steering column lever (2.2) is pivotable around its joint (B) from a spring-back position in a third plane (P3), in a direction (piv3) out of said third plane (P3) towards the driver to switch the head lights (107) between off, flasher in which the head lights (107) provide a burst of flashes, and main beam in which the headlights (107) provide continuous light.

11. The control interface system according to claim 10, wherein the joint (B) of the second steering column lever (2.2) is further arranged such that the second steering column lever (2.2) is pivotable around its joint (B) in the third plane (P3) out of its spring-back position.

12. A vehicle (100) comprising:
- an electronic control unit; and
- a first control interface system (1) according to any one of the previous claims for controlling the vehicle (100) through the electronic control unit.

13. A vehicle according to claim 12, wherein the electronic control unit comprises a second control interface system (10) for controlling the vehicle (100) independently of the first control interface system (1).

## Patentansprüche

1. Steuerschnittstellensystem (1) zum Steuern eines Fahrzeugs (100) durch eine elektronische Steuereinheit (ECU), wobei das System einen ersten Lenksäulenhebel (2.1) umfasst, der Folgendes umfasst:
ein Gangmodus-Rollrad (5) zum Steuern eines Getriebes (102) des Fahrzeugs, um zwischen einer Vielzahl von Gangmodi zu schalten, die einen Vorwärtsfahrgangmodus, einen neutralen Gangmodus und einen Rückwärtsfahrgangmodus umfassen,
wobei das Gangmodus-Rollrad (5) angeordnet ist zum Drehen aus einer einzelnen Rückfederungsposition davon in:
- einer ersten Rollrichtung (S1) zum Wechseln von entweder dem neutralen Gangmodus in den Vorwärtsgangmodus und dem Rückwärtsgangmodus in den neutralen Gangmodus oder den Vorwärtsgangmodus, beispielsweise über den neutralen Gangmodus; und
- eine zweite Rollrichtung (S2), die der ersten Rollrichtung entgegengesetzt ist, um entweder von dem neutralen Gangmodus in den Rückwärtsgangmodus oder von dem Vorwärtsgangmodus in den neutralen Gangmodus oder den Rückwärtsgangmodus zu wechseln, beispielsweise über den neutralen Gangmodus,
wobei die einzelne Rückfederungsposition die einzige Ruheposition des Gangmodus-Rollrads (5) ist, sodass das Getriebe (102) gesteuert werden kann, um zwischen der Vielzahl von Gangmodi mit der einzelnen Rückfederungsposition als eine Startposition zum Drehen des Gangmodus-Rollrads zu schalten, **dadurch gekennzeichnet, dass** das Gangmodus-Rollrad (5) auf einer dem Benutzer zugewandten Fläche (F1) des ersten Lenksäulenhebels (2.1) angeordnet ist.

2. Steuerschnittstellensystem nach Anspruch 1, wobei das Gangmodus-Rollrad (5) eingerichtet ist, um bis zu zwei Positionen in jede Richtung zu verschieben, die durch unterschiedliche haptische Kraftniveaus unterscheidbar sind.

3. Steuerschnittstellensystem nach einem der vorhergehenden Ansprüche, wobei die verschiedenen haptischen Kraftniveaus entweder ein erstes haptisches Kraftniveau (FL1) oder ein von dem ersten Niveau unterschiedliches zweites haptisches Kraftniveau (FL2) enthalten, wobei die erste haptische Kraft (FL1) aufgebracht wird zum
Wechseln von entweder dem neutralen Gangmodus in den Vorwärtsgangmodus, und Wechseln von entweder dem neutralen Gangmodus in den Rückwärtsgangmodus, und
wobei die zweite haptische Kraft (FL2) aufgebracht wird zum
Wechseln von dem Rückwärtsgangmodus in den Vorwärtsgangmodus über den neutralen Gangmodus, wenn der Benutzer über den neutralen Gangmodus hinaus rollt, und
Wechseln von dem Vorwärtsgangmodus in den Rückwärtsgangmodus über den neutralen Gangmodus, wenn der Benutzer über den neutralen Gangmodus hinaus rollt.

4. Steuerschnittstellensystem nach einem der vorstehenden Ansprüche, wobei der erste Lenksäulenhebel (2.1) einen Fahrmodusschalter (3) zum Umschalten eines Getriebes (102) des Fahrzeugs umfasst zwischen
einer manuellen Steuerung zum Ermöglichen eines manuellen Umschaltens des Fahrmodus, und
mindestens einer automatischen Steuerung zum automatischen Umschalten des Fahrmodus.

5. Steuerschnittstellensystem nach einem der vorstehenden Ansprüche, wobei der erste Lenksäulenhebel (2.1) ein Gelenk (A) umfasst, um bei Verwendung mit einer Lenksäule (101) des Fahrzeugs (100) gelenkig verbunden zu sein, sodass der erste Lenksäulenhebel (2.1) aus einer zweiten Rückfederungsposition in einer ersten Ebene (P1) in eine erste Richtung (piv1) aus der ersten Ebene (P1) heraus, beispielsweise zu einem Benutzer hin, schwenkbar ist, um einen Gang hochzuschalten, und in eine zweite Richtung (piv2) entgegengesetzt zur ersten Richtung aus der ersten Ebene (P1) heraus, beispielsweise von einem Benutzer weg, schwenkbar ist.

6. Steuerschnittstellensystem nach Anspruch 5, wobei das Gelenk (A) ferner so angeordnet ist, dass der erste Lenksäulenhebel (2.1) in der ersten Ebene (P1) zwischen der mindestens einen Motorbremseneingriffsposition (br1, br2, br3) und einer Motorbremsenausrückposition (br0) schwenkbar ist, wobei die anfängliche Ruheposition des ersten Lenksäulenhebels (2.1) in der ersten Ebene (P1) entweder eine der mindestens einen Motorbremseneingriffsposition (br1, br2, br3) oder eine Motorbremsenausrückposition (br0) ist.

7. Steuerschnittstellensystem nach einem der vorstehenden Ansprüche, umfassend einen zweiten Lenksäulenhebel (2.2), der ein Regensensor-Rollrad (15) und ein Scheibenwischer-Rollrad (25) umfasst.

8. Steuerschnittstellensystem nach mindestens Anspruch 7, wobei der zweite Lenksäulenhebel (2.2) Folgendes umfasst:
einen Hupenschalter (3.2) zum Aktivieren der Hupe (105) des Fahrzeugs (100); und
einen Waschanlagenschalter (3.3) zum Aktivieren eines Sprühmechanismus für die Windschutzscheibenreinigung (106) des Fahrzeugs (100),
wobei sowohl der Hupenschalter (3.2) als auch der Waschanlagenschalter (3.3) als ein zurückfedernder Druckknopf angeordnet ist, der zwischen einer aktiven und einer inaktiven Position bewegbar ist, und wobei ein solcher Druckknopf vorgespannt ist, um in die inaktive Position zurückzukehren, sodass die Hupe und der Sprühmechanismus nur aktiv sind, wenn der jeweilige Schalter gedrückt wird.

9. Steuerschnittstellensystem nach mindestens Anspruch 8, wobei der Hupenschalter (3.2) und der Waschanlagenschalter (3.3) an einer distalen Endfläche (F3) des zweiten Lenksäulenhebels (2.2) angeordnet sind und wobei das Regensensor-Rollrad (15) und ein Scheibenwischermodus-Rollrad (25) an einer dem Benutzer zugewandten Fläche (F4) des zweiten Lenksäulenhebels (2.2) angeordnet sind.

10. Steuerschnittstellensystem nach mindestens einem der vorstehenden Ansprüche 7 bis 9, wobei der zweite Lenksäulenhebel (2.2) ein Gelenk (B) umfasst, um bei Verwendung mit einer Lenksäule (101) des Fahrzeugs (100) gelenkig verbunden zu sein, sodass der zweite Lenksäulenhebel (2. 2) um sein Gelenk (B) aus einer zurückgefederten Position in einer dritten Ebene (P3) in eine Richtung (piv3) aus der dritten Ebene (P3) zu dem Fahrer hin schwenkbar ist, um die Scheinwerfer (107) zwischen Aus, Lichthupe, bei der die Scheinwerfer (107) eine Reihe von Lichtblitzen bereitstellen, und Fernlicht, bei dem die Scheinwerfer (107) Dauerlicht bereitstellen, umzuschalten.

11. Steuerschnittstellensystem nach Anspruch 10, wobei das Gelenk (B) des zweiten Lenksäulenhebels (2.2) ferner so angeordnet ist, dass der zweite Lenksäulenhebel (2.2) um sein Gelenk (B) in der dritten Ebene (P3) aus seiner Rückfederungsposition heraus schwenkbar ist.

12. Fahrzeug (100) umfassend:
- eine elektronische Steuereinheit; und
- ein erstes Steuerschnittstellensystem (1) nach einem der vorstehenden Ansprüche zum Steuern des Fahrzeugs (100) über die elektronische Steuereinheit.

13. Fahrzeug nach Anspruch 12, wobei die elektronische Steuereinheit ein zweites Steuerschnittstellensystem (10) zum Steuern des Fahrzeugs (100) unabhängig von dem ersten Steuerschnittstellensystem (1) umfasst.

## Revendications

1. Système d'interface de contrôle (1) pour contrôler un véhicule (100) par l'intermédiaire d'une unité de contrôle électronique (ECU), le système comprenant un premier levier de colonne de direction (2.1) comprenant :
une roue de défilement de modes de marche (5) pour contrôler une boîte de vitesses (102) du véhicule afin de commuter entre une pluralité de modes de marche comprenant un mode de marche avant, un mode de point mort et un mode de marche arrière,
dans lequel la roue de défilement de modes de marche (5) est agencée pour tourner à partir d'une position de rappel élastique unique de celle-ci dans :
- une première direction de défilement (S1) pour passer du mode de point mort au mode de vitesse d'entraînement avant et du mode de marche arrière au mode de point mort ou au mode de vitesse d'entraînement avant, par exemple via le mode de point mort ; et
- une seconde direction de défilement (S2), opposée à la première direction de défilement pour passer soit du mode de point mort au mode de marche arrière, soit du mode de marche avant au mode de point mort ou au mode de marche arrière, par exemple via le mode de point mort,
dans lequel la position de rappel élastique unique est la seule position de repos de la roue de défilement de modes de marche (5), de sorte que la boîte de vitesses (102) peut être commandée pour commuter entre ladite pluralité de modes de marche avec la position de rappel élastique unique comme position de départ pour faire tourner la roue de défilement de modes de marche, **caractérisé en ce que** la roue de défilement de modes de marche (5) est agencée sur une face (F1) faisant face à l'utilisateur du premier levier de colonne de direction (2.1).

2. Système d'interface de contrôle selon la revendication 1, dans lequel la roue de défilement de modes de marche (5) est agencée pour se déplacer jusqu'à deux positions dans chaque direction, pouvant être distinguées au moyen de différents niveaux de force haptique.

3. Système d'interface de contrôle selon l'une quelconque des revendications précédentes, dans lequel les différents niveaux de force haptique comprennent l'un ou l'autre d'un premier niveau de force haptique (FL1) et d'un second niveau de force haptique (FL2) différent du premier niveau, dans lequel la première force haptique (FL1) est appliquée pour
passer du mode de point mort au mode de marche avant, et passer du mode de point mort au mode de marche arrière, et
dans lequel la seconde force haptique (FL2) est appliquée pour
passer du mode de marche arrière au mode de marche avant via le mode de point mort, lorsque l'utilisateur fait défiler au-delà du mode de point mort, et
passer du mode de marche avant au mode de marche arrière via le mode de point mort, lorsque l'utilisateur fait défiler au-delà du mode de point mort.

4. Système d'interface de contrôle selon l'une quelconque des revendications précédentes, dans lequel le premier levier de colonne de direction (2.1) comprend un commutateur de mode de conduite (3) pour commuter une boîte de vitesses (102) du véhicule entre
une contrôle manuelle pour activer une commutation manuelle du mode de conduite, et
au moins une contrôle automatique pour une commutation automatique du mode de conduite.

5. Système d'interface de contrôle selon l'une quelconque des revendications précédentes, dans lequel le premier levier de colonne de direction (2.1) comprend une articulation (A) pour, en utilisation, s'articuler avec une colonne de direction (101) du véhicule (100) de telle sorte que le premier levier de colonne de direction (2.1) peut pivoter, à partir d'une seconde position de rappel élastique dans un premier plan (P1), dans une première direction (piv1) hors dudit premier plan (P1), telle que vers un utilisateur, pour commuter un rapport, et peut pivoter dans une seconde direction (piv2) opposée à la première direction hors du premier plan (P1), telle que loin d'un utilisateur.

6. Système d'interface de contrôle selon la revendication 5, dans lequel l'articulation (A) est en outre agencée de telle sorte que le premier levier de colonne de direction (2.1) peut pivoter dans le premier plan (P1) entre la au moins une position d'engagement de frein moteur (br1, br2, br3) et une position de désengagement de frein moteur (br0), dans lequel la position de repos initiale du premier levier de colonne de direction (2.1) dans le premier plan (P1) est l'une de la au moins une position d'engagement de frein moteur (br1, br2, br3) et d'une position de désengagement de frein moteur (br0).

7. Système d'interface de contrôle selon l'une quelconque des revendications précédentes, comprenant un second levier de colonne de direction (2.2) comprenant une roue de défilement de capteur de pluie (15) et une roue de défilement d'essuie-glace (25).

8. Système d'interface de contrôle selon au moins la revendication 7, dans lequel le second levier de colonne de direction (2.2) comprend :
un commutateur de klaxon (3.2) pour activer le klaxon (105) du véhicule (100) ; et
un commutateur de lave-glace (3.3) pour activer un mécanisme de pulvérisation de nettoyage de pare-brise (106) du véhicule (100),
dans lequel chacun du commutateur de klaxon (3.2) et du commutateur de lave-glace (3.3) est agencé sous la forme d'un bouton-poussoir à ressort, qui est mobile entre une position active et une position inactive, et dans lequel un tel bouton-poussoir est sollicité pour revenir à la position inactive de sorte que le klaxon et le mécanisme de pulvérisation ne soient actifs que lorsque le commutateur respectif est poussé.

9. Système d'interface de contrôle selon au moins la revendication 8, dans lequel le commutateur de klaxon (3.2) et le commutateur de lave-glace (3.3) sont agencés sur une face d'extrémité distale (F3) du second levier de colonne de direction (2.2) et dans lequel la roue de défilement de capteur de pluie (15) et une roue de défilement de mode d'essuie-glace (25) sont agencées sur une face tournée vers l'utilisateur (F4) du second levier de colonne de direction (2.2).

10. Système d'interface de contrôle selon au moins l'une quelconque des revendications précédentes 7 à 9, dans lequel le second levier de colonne de direction (2.2) comprend une articulation (B) pour, en utilisation, s'articuler avec une colonne de direction (101) du véhicule (100) de telle sorte que le deuxième levier de colonne de direction (2.2) puisse pivoter autour de son articulation (B) à partir d'une position de rappel élastique dans un troisième plan (P3), dans une direction (piv3) hors dudit troisième plan (P3) vers le conducteur pour commuter les phares (107) entre ARRÊT, clignotant, les phares (107) fournissant une rafale de clignotements, et faisceau principal, les phares (107) fournissant une lumière continue.

11. Système d'interface de contrôle selon la revendication 10, dans lequel l'articulation (B) du second levier de colonne de direction (2.2) est en outre agencée de telle sorte que le second levier de colonne de direction (2.2) puisse pivoter autour de son articulation (B) dans le troisième plan (P3) hors de sa position de rappel élastique.

12. Véhicule (100), comprenant :
- une unité de contrôle électronique ; et
- un premier système d'interface de contrôle (1) selon l'une quelconque des revendications précédentes pour contrôler le véhicule (100) par l'intermédiaire de l'unité de contrôle électronique.

13. Véhicule selon la revendication 12, dans lequel l'unité de contrôle électronique comprend un second système d'interface de contrôle (10) pour contrôler le véhicule (100) indépendamment du premier système d'interface de contrôle (1).
